# EUROPEAN PATENT SPECIFICATION

(11) **EP 2 071 093 B1**
(45) Date of publication and mention of the grant of the patent: **30.03.2011**
(21) Application number: 08002998.6
(22) Date of filing: 19.02.2008
(51) Int. Cl.: E04C 1/42, C03C 17/34

(54) **Glass block for building with a coloring effect**
Glassblock für Gebäude mit einem Farbeffekt
Bloc de verre pour bâtiments avec un effet de couleur

(30) Priority: 14.12.2007 ES 200702577 U
(43) Date of publication of application: 17.06.2009
(73) Proprietor: SGD LA GRANJA VIDRIERIA, S.L., 40100 San Idelfonso-La Granja Segovia (ES)
(72) Inventor: Hurtado Marjalizo, Manuel SGD La Granja Vidrieria, S.L., 40100 San Idelfonso-La Granja Segovia (ES); Fernandez Soto, Ramon c/o SGD La Granja Vidrieria, S.L., 40100 San Idelfonso-La Granja Segovia (ES)
(74) Representative: Isern-Jara, Nuria

(56) References cited:
- DE-A1- 4 000 006
- DE-A1- 4 013 252
- GB-A- 484 173
- US-A- 2 269 123
- US-A- 5 333 427

## Description

### Object of the Invention

This present invention refers to a glass block for building, in particular for use in the building of dividing walls, the separation and closing off of spaces, and in similar applications that contributes essential novelty characteristics and appreciable advantages compared to the already known similar elements and which are used in the current state of the art.

More specifically the invention proposes the development and creation of a glass block for building that is substantially improved when compared to the currently existing building block or bricks by virtue of its inherent capacity to give light with a predetermined colour that can be chosen from a range of colours. The block has been conceived in such a way that allows its repetitive manufacture and enables short production runs.

The field of the application of the invention is included in the sector involved in the production of building elements, especially glass blocks for the building of dividing, separating or even decorative walls, with a transparent or translucent nature.

### Background and summary of the invention

The existence in the market of construction elements made from glass has been known for a number of years, known under differing names amongst them the ones which stand out are terms such as glass block, glass brick, glass wall blocks,... etc. The special feature of these glass blocks consists in that in general they have prismatic shapes, that enable their laying to be placed against each other or superimposed either for construction of complete dividing walls, or for the covering of a specific space or opening existing in a wall. On being constructed from a glass base, they let the light pass through to a greater or lesser degree depending on the degree of transparency, also being able to be used for the purposes of decoration both internally and externally.

A glass block of the type mentioned basically consists of two parts or halves of moulded glass, that are welded at a very high temperature in order to create an inner chamber with a degree of vacuum when the block is cooled. In this way a significant level of thermal and acoustic insulation is achieved. Given the wide range of sizes and colours on the market (some models with different shapes other than prismatic), allow decorative dividing walls both in straight lines and equally with curved profiles or sections.

Also known in the state of the art are the different methods and technologies developed to allow these blocks, regardless of the differences of surface texture that they may have, to reflect an amount of coloured light with some pre-defines tonalities provided by the application of the required colour pigments. Along these lines mention can be made of, for example, walls may be made in which the lateral faces of the blocks, this meaning, the faces seen that have the greater surface area, are painted with a paint colour chosen for the purpose of achieving the same luminous tonality, in order to do this an opening is made in the edge of the block through which the paint is applied. This technique has the main disadvantage that, on drilling the edge of the block, the vacuum feature is lost that is made during manufacture and with this the desired advantages of thermal and acoustic insulation.

In accordance with another alternative version of the glass block of the current art for the providing of predetermined chromatic tones, the blocks are given a coating of white paint on the perimeter edge, whilst the external surfaces of the visible faces are given a first coat of a coloured pigment and a second coat applied on the first and aimed at providing a suitable protection to the pigment from external agents. Although this solution permits the luminosity of the block to adapt to the pigment applied, it is costly; it needs a significant amount of time and is not financially suitable for short runs.

It is known from DE-40 00 006 A1 a layer of coloured pigment at the outside surface of the perimeter edge to obtain a coloured glass block without having to colour the whole glass surface. There is no suggestion for the skilled person to construct this layer from multiplicity of layers. This document discloses the features of said Patent Application in the preamble of the claim 1.

Taking the disadvantages associated to the currently available glass blocks into consideration and which have been mentioned in the above summary, the main aim proposed of this present invention has been the fact of developing a glass block for the same applications as the currently known glass blocks, and by means of which effective solutions are provided for said disadvantages. This aim has been fully achieved by means of a glass block that is going to be the object of the description that follows, whose main features are found contained in the characterizing part of the Claim 1 annexe.

In essence, the glass block proposed by the invention comprises in general of a block whose structural features and shapes are similar to those already known, made up from two equal parts or halves, symmetrically fitted together on the middle, and fused together at a very high temperature to form the inner chamber with a certain degree of vacuum that guarantees the desired properties of thermal and acoustic insulation. The main feature of the block of the invention is its capacity to provide coloured light, for which purpose, the provision has been made on the perimeter edge of each block of a first coat made up from a coloured pigment that will be to provide the reflected light with the tonality that corresponds to the wavelength not absorbed by the stated coating depending on the pigment chosen; a second reflecting or mirror effect coat is used to make the effective reflection of the incident light by means of the coloured pigment, and a third and final coating of paint to cover and protect the above coatings. In this way, all of the layers are applied on the outside of the block, on the external surface of the perimeter edge, without the need to drill a hole in said edge. This makes the carrying out and repetition of the procedure easier and enables the manufacture of short runs that can be considered as economically viable.

As will be understood, the type of pigment can vary in line with the needs and desires for colouring that is required, and in addition it is regardless of the type of block or of the texture or finish characteristics that is given to same.

### Brief Description of the Drawings

These and other characteristics and advantages of the invention will be shown more clearly from the detailed description that follows an example of a preferred embodiment of same, only given by way of being an illustrative example and in no circumstance by way of limitation, taking the drawings which are attached, in which:
Figure 1 shows a lateral elevation view of an example of a normal glass block of those in the current state of the art, and
Figure 2 shows a front raised view of a block as shown in Figure 1, partially sectioned into one quarter, and made in accordance with the present invention.

### Description of a preferred embodiment

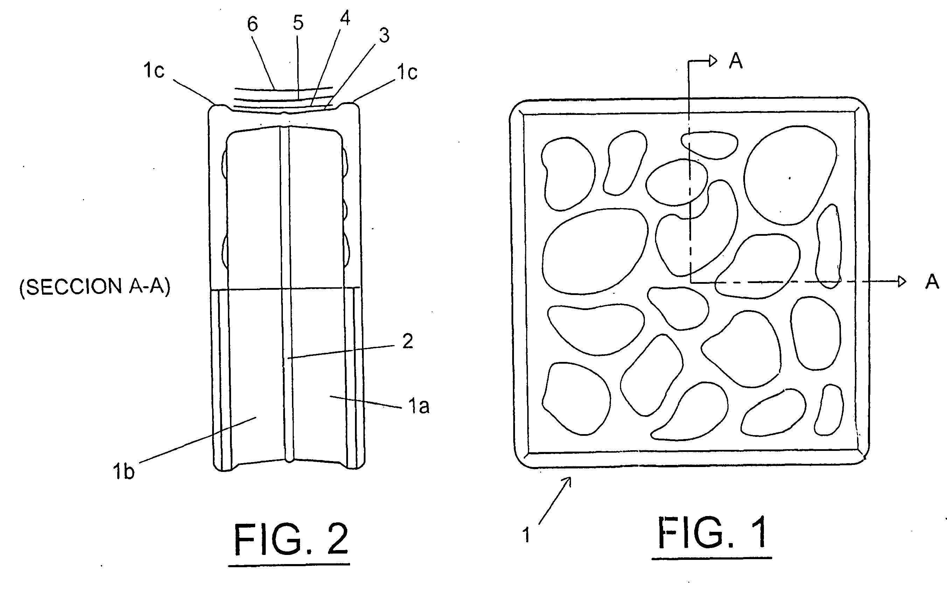

As and how mentioned above, the detailed description of the glass block proposed by the invention is going to be carried out on the basis of the figures of the annexed drawings, by means of which the same numerical references are used to designate the same or similar parts. Thus, paying heed in the first place to the representation as shown in Figure 1, a side elevation view can be seen of a conventional glass block, shown with the reference number 1, made by means of the application of two parts or halves each one against the other at a high temperature, which adopts a square based prismatic shape, and in which the surfaces of the larger faces are finished off with a certain texture, which can be conventional. The two halves can better be seen in Figure 2, which have been given the references la and 1b, the ridges 1c also can be seen that surround the perimeter of each one of the larger external faces, and in addition zone 2 of the intermediary joint can also be seen. The upper half of the representation in Figure 2 shows a one quarter section as and how shown by the line A-A in Figure 1, all of this for the purpose of being able to show the arrangement of the layers that have been applied to the perimeter edge 3 of the piece.

In accordance with that stated previously, there are three layers in total that cover the perimeter surface of the piece within the perimeter ridges 1c of each one of the parts or halves that make it up. Of these, the one that is more in contact with the perimeter edge surface of the piece is the layer stated with reference number 4, made up from a coloured pigment with the tonality as required; the next layer is number 5 that covers the previous layer, it consists of a mirror effect layer, that is necessary to reflect the light that falls on same after passing through the transparent or translucent faces of the larger faces and passing through the previous layer, with the tonality and pigment colour of layer 4; finally, layer 6 consists solely of a layer of paint, that covers and protects the previous layers against external agents, and therefore guarantees the preservation of the block in perfect conditions of use.

As can be understood, the cover of the perimeter edge of piece 1 with the different layers, does not offer any special difficulties with the current means, and therefore allows a repetitive reproduction of the pieces with identical features, even when dealing with short runs.

In the description that has been made an example of glass block has been considered with a generally square based prismatic shape. This must not be considered as a limitation, as the invention is applicable to blocks of any shape, size or model, with the only demand being that it has a perimeter surface onto which the different layers that have been described can be applied.

It is not considered necessary to make the contents of this present description more extensive so that an expert in the field can understand its scope and the advantages that can be derived from same, likewise carry out its practical embodiment.

In spite of the above, and given that the description made corresponds solely to an example of a preferred embodiment, it will be understood that within its essence modifications and variations can be introduced, likewise protected, that can affect the characteristics such as shape, size or the manufacturing materials of the pieces, the types and colours of the pigments, or even the nature of the other layers, without this going away from the aim of the invention as and how defined in the claims that follow.

## Claims

1. A glass block for building, useful for dividing walls and/or separating walls, both for internal as well as external use, having a clearly decorative aspect having a texture in such a way that they are transparent or translucent, the block (1) generally having a prismatic shape obtained from the joining of two equal halves (1a, 1b), applied to each other in a symmetrical manner in regard to a central plan, comprising an inner chamber with a certain degree of vacuum and being the two halves (1a, 1b) welded along an intermediate zone (2) at the joint of said halves (1a, 1b), each one of the stated halves (1a, 1b) being provided with a ridge (1c) that surrounds the perimeter of an external larger face of each respective half, in such a way that both ridges (1c) have a specific perimeter edge (3), **characterised in that** said perimeter edge (3) holds a multiplicity of layers (4, 5 and 6) applied onto the surface, consisting of layer (4) with a coloured pigment, with whatever tonality that is desired; a layer (5) that has a mirror effect capable of reflecting the incident light that passes through the pigment so that said layer is capable of taking on the colouring of the latter, and final layer (6) of paint that covers and protects the previous layers.

## Patentansprüche

1. Glasbaustein insbesondere zur Errichtung von Teilungs- und/oder Trennwänden sowohl in Innen- wie auch in Außenbereichen mit eindeutig dekorativem Aussehen und so strukturiert, dass er mehr oder weniger durchsichtig oder durchscheinend ist, wobei der Glasbaustein (1) im Allgemeinen eine prismatische Form aufweist, die er aus der Verbindung von zwei gleichen Hälften (1a, 1b), die zu einer Mittelebene symmetrisch aneinandergelegt werden, erhält, wobei er eine Innenkammer mit einem gewissen Vakuum umfasst und die beiden Hälften (1a, 1b) entlang eines Zwischenbereichs (2), in dem diese Hälften (1a, 1b) aneinanderliegen, miteinander verschweisst werden und wobei jede der Hälften (1a, 1b) einen den Umfang der größeren Außenfläche jeder Hälfte umlaufenden Wulst (1c) aufweist, derart dass zwischen beiden Wülsten (1c) eine Umfangskante (3) entsteht, **dadurch gekennzeichnet, dass** diese Umfangskante (3) zahlreiche Schichten (4, 5, 6) trägt, die auf ihre Oberfläche aufgebracht werden, welche im Wesentlichen aus einer Schicht (4) mit Farbpigment in einem beliebigen Farbton, einer Schicht (5) mit Spiegeleffekt, die das einfallende Licht, das das Pigment durchdringt und daher die Färbung dieses Pigments annimmt, reflektiert und zuletzt eine Farbschicht (6), die die vorhergehenden abdeckt und schützt, besteht.

## Revendications

1. Bloc de verre pour la construction, destiné en particulier à être appliqué à la construction de cloisons ou de séparateurs, en intérieur comme en extérieur, d'aspect nettement décoratif, avec finissage de telle sorte qu'ils sont plus ou moins transparents ou translucides, dont le bloc (1) prend généralement une forme prismatique obtenue à partir de l'assemblage de deux moitiés (1a, 1b) identiques, appliquées l'une contre l'autre symétriquement par rapport à un plan central, les deux moitiés (1a, 1b) comprennent une chambre intérieure avec un certain niveau de vide et sont soudées le long d'une zone intermédiaire (2) au point d'union desdites moitiés (1a, 1b), chacune des moitiés citées (1a, 1b) est dotée d'un rebord (1c) qui entoure le périmètre de la face extérieure principale de chaque moitié respective, de sorte qu'un bord (3) périmétral est défini entre les deux rebords (1c), **caractérisé en ce que** ledit bord (3) périmétral supporte une multiplicité de couches (4, 5 et 6) appliquées sur la surface de celui-ci. Lesdites couches consistent essentiellement en une couche (4) de pigment coloré, avec n'importe quelle tonalité de couleur désirée ; une couche (5) miroir qui réfléchit la lumière incidente traversant le pigment et qui est donc capable d'acquérir la coloration de ce dernier ; et une dernière couche (6) de peinture qui couvre et protège les couches antérieures.
